# EUROPÄISCHE PATENTANMELDUNG

(11) **EP 4 012 190 A1**
(43) Veröffentlichungstag der Anmeldung: **15.06.2022**
(21) Anmeldenummer: 21211397.1
(22) Anmeldetag: 30.11.2021
(51) Int. Cl.: F04D 27/00

(54) **VERFAHREN ZUR BESTIMMUNG UND ERKENNUNG VON ZUSTÄNDEN, ZUSTANDSÄNDERUNGEN UND FEHLERN EINER STRÖMUNGSMASCHINE**

(30) Priorität: 10.12.2020 DE 102020133000
(71) Anmelder: ebm-papst Landshut GmbH, 84030 Landshut (DE)
(72) Erfinder: Simon, Bernhard, 93059 Regensburg (DE)
(74) Vertreter: Staeger & Sperling Partnerschaftsgesellschaft mbB

(57) **Zusammenfassung**

Die Erfindung betrifft ein Verfahren zur Bestimmung und Erkennung von Zuständen, Zustandsänderungen und Fehlern einer einen Antrieb umfassenden Strömungsmaschine, wobei ein Verlauf einer unmittelbar von einer Eingangsleistung des Antriebs abhängigen ersten Messgröße als Ist-Sprungverlauf und ein Verlauf einer unmittelbar von einer Ausgangsleistung der Strömungsmaschine abhängigen zweiten Messgröße als Ist-Sprungantwortverlauf (10) bei einem vorbestimmten Antriebsdrehmomentensprung, bei welchem sich die erste Messgröße sprungartig von einem ersten quasistationären Niveau auf ein zweites quasistationäres Niveau bewegt, über die Zeit erfasst werden, wobei der Ist-Sprungverlauf und der Ist-Sprungantwortverlauf (10) mit jeweils zumindest einem vorbestimmten Kennfeld, das jeweils zumindest einen entsprechenden Soll-Verlauf aufweist, verglichen werden, wobei aus dem Vergleich des Ist-Sprungverlaufs und des Ist-Sprungantwortverlaus (10) mit dem jeweiligen zumindest einen Kennfeld ein jeweiliger Vergleichswert bestimmt wird, und wobei aus den beiden Vergleichswerten ein Zustand, eine Zustandsänderung oder ein Fehler der Strömungsmaschine bestimmt wird.

## Beschreibung

Die Erfindung betrifft ein Verfahren zur Bestimmung und Erkennung von Zuständen, Zustandsänderungen und Fehlern einer Strömungsmaschine, wobei unter Zuständen insbesondere Betriebspunkte und Drosselpunkte verstanden werden.

Im Stand der Technik ist eine Vielzahl von Verfahren und Vorrichtungen zur Bestimmung von Betriebs- und Drosselpunkten von Strömungsmaschinen und zur Erfassung deren Änderungen bekannt. Diese benötigen jedoch oftmals eine zusätzliche Sensorik und eine zusätzliche Auswerteelektronik, so dass die Bestimmung solcher Zustände und deren Änderungen vergleichsweise aufwändig sind.

Hinzukommt, dass anhand der ermittelten Werte Fehler zwar oftmals vermutet, jedoch nicht zuverlässig erkannt werden können.

Für die Erfassung bzw. Bestimmung der Betriebs- und Drosselpunkte und deren Änderung sowie für die Erkennung von Fehlern sind zudem oftmals unterschiedliche Sensoren notwendig, was zu zusätzlichen Kosten führt.

Der Erfindung liegt deshalb die Aufgabe zugrunde, die vorgenannten Nachteile zu überwinden und ein Verfahren bereitzustellen, mit welchem einfach und kostengünstig zumindest ein Betriebspunkt bestimmt, eine Änderung des Drosselpunktes erfasst und Fehler erkannt werden können.

Diese Aufgabe wird durch die Merkmalskombination gemäß Patentanspruch 1 gelöst.

Erfindungsgemäß wird ein Verfahren zur Bestimmung und Erkennung von Zuständen, Zustandsänderungen und Fehlern einer einen Antrieb umfassenden Strömungsmaschine vorgeschlagen. Unter Zuständen werden hierbei insbesondere Betriebspunkte und Drosselpunkte verstanden, so dass vorzugsweise Betriebspunkte bestimmt und Drosselpunktänderungen erkannt werden können. Bei dem Antrieb kann es sich um einen Motor und insbesondere um einen Elektro-Motor mit einem Stator und Rotor handeln, welcher ein Laufrad der Strömungsmaschine antreiben kann. Zudem ist die Strömungsmaschine vorzugsweise ein Gasgebläse. Gemäß dem erfindungsgemäßen Verfahren werden ein Verlauf einer unmittelbar von einer Eingangsleistung des Antriebs abhängigen ersten Messgröße, wie ein Statorstrom oder eine in einem Stator des Antriebs umgesetzte Leistung, und ein Verlauf einer von einer Ausgangsleistung der Strömungsmaschine abhängigen zweiten Messgröße, wie eine Drehzahl des Antriebs oder des durch den Antrieb angetriebenen Laufrads oder ein mittels des Antriebs erzeugter Duck, bei einem vorbestimmten Antriebsdrehmomentensprung, bei welchem sich die erste Messgröße sprungartig von einem ersten quasistationären Niveau auf ein zweites quasistationäres Niveau bewegt, über die Zeit d.h. zeitaufgelöst bzw. im Zeitbereich erfasst. Dabei entspricht der Verlauf der ersten Messgröße einem Ist-Sprungverlauf, korrespondiert also vorzugsweise unmittelbar zu dem Antriebsdrehmomentensprung, der auch vereinfacht als Drehmomentensprung oder Momentensprung bezeichnet werden kann, bzw. zu einem durch den Drehmomentensprung bestimmten Eingangssignal der Strömungsmaschine. Die erste Messgröße kann daher bezogen auf das durch die Strömungsmaschine gebildete System als eingangsseitige Messgröße bezeichnet werden. Der Verlauf der zweiten Messgröße entspricht einem Ist-Sprungantwortverlauf einer Sprungantwort des durch die Strömungsmaschine gebildeten Systems auf den Antriebsdrehmomentensprung, so dass die zweite Messgröße bezogen auf das System auch als ausgangsseitige Messgröße bezeichnet werden kann. Der Ist-Sprungverlauf und der Ist-Sprungantwortverlauf werden im Weiteren auch vereinfachend als Ist-Verläufe bezeichnet. Wird als zweite Messgröße beispielsweise ein Drehzahlverlauf des Antriebs oder des Laufrades erfasst, hängt die Sprungantwort auf den Drehmomentensprung bzw. der Verlauf der zweiten Messgröße insbesondere von dem Verlauf des Antriebsdrehmoments, den Massenträgheiten der beteiligten sich drehenden Komponenten und der aerodynamischen Last ab. Weiter werden der Ist-Sprungverlauf mit zumindest einem vorbestimmten ersten Kennfeld, das zumindest einen Soll-Sprungverlauf aufweist, und der Ist-Sprungantwortverlauf mit zumindest einem vorbestimmten zweiten Kennfeld, das zumindest einen Soll-Sprungantwortverlauf aufweist, verglichen. Der Soll-Sprungverlauf und der Soll-Sprungantwortverlauf werden im Weiteren auch vereinfachend als Soll-Verläufe bezeichnet. Ferner können durch den zumindest einen Soll-Sprungverlauf und/oder den zumindest einen Soll-Sprungantwortverlauf bzw. durch die jeweiligen Kennfelder Toleranzen berücksichtigt werden, so dass um die jeweiligen Verläufe Toleranzbereiche in den jeweiligen Kennfeldern hinterlegt sein können. Auf Basis dieser Kennfelder bzw. dem Vergleich des Ist-Sprungverlaufs und des Ist-Sprungantwortverlaufs mit den jeweiligen Kennfeldern kann auf Fehler am Antrieb, Änderungen im Drosselpunkt sowie auf einen (neuen) Betriebspunkt geschlossen werden. Aus dem Vergleich des Ist-Sprungverlaufs mit dem zumindest einen ersten Kennfeld werden ein erster Vergleichswert und aus dem Vergleich des Ist-Sprungantwortverlaufs mit dem zumindest einen zweiten Kennfeld ein zweiter Vergleichswert bestimmt. Dabei kann der jeweilige Vergleichswert beispielsweise jeweils einem konkreten den Betriebspunkt bestimmenden Größenpaar entsprechen als auch eine Abweichung bzw. eine Stärke der Abweichung des jeweiligen Ist-Verlaufs vom jeweiligen Soll-Verlauf angeben, so dass der Vergleichswert abhängig von dem zu ermittelten Zustand oder der zu ermittelten Zustandsänderung gewählt werden kann. Sollen mehrere Zustände, Zustandsänderungen oder Fehler bestimmt bzw. erkannt werden, können hierfür auch mehrere erste und mehrere zweite Vergleichswerte vorgesehen sein. Entsprechend sieht das Verfahren zudem vor, dass aus dem ersten Vergleichswert und/oder dem zweiten Vergleichswert und/oder aus einem Vergleich des ersten Vergleichswertes und des zweiten Vergleichswertes miteinander ein Zustand, eine Zustandsänderung oder ein Fehler der Strömungsmaschine bestimmt wird. Der Vergleich und eine darauf basierende Bestimmung eines Zustandes oder einer Zustandsänderung kann auch als Auswertung oder Analyse bezeichnet werden.

Der Grundgedanke der Erfindung ist es also, das Verhalten und insbesondere das zeitliche Verhalten der ersten Messgröße, wie beispielsweise der Antrieb-Drehzahl, als Sprungantwort auf einen definierten Antriebsdrehmomentensprung zu analysieren, welches durch die Ermittlung des Verlaufs der zweiten Messgröße erfasst und durch die Ermittlung des Verlaufs der ersten Messgröße, wie beispielsweise dem Statorstrom des Antriebs, überwacht bzw. auf seine Plausibilität geprüft wird. Die Antrieb-Drehzahl hängt vor allem von dem Antriebsdrehmoment, den Massenträgheiten des Rotors des Antriebs und des durch den Antrieb angetriebenen Laufrades sowie der auf das Laufrad wirkenden aerodynamischen Last ab. Auf der Basis eines Vergleiches der ermittelten Verläufe der ersten und der zweiten Messgröße mit den jeweiligen zugehörigen und vorbekannten Kennfeldern und Toleranzen, kann auf Fehler am Antrieb oder Änderungen im Drosselpunkt bzw. auf den Betriebspunkt der Strömungsmaschine geschlossen werden.

Dabei ist von besonderer Bedeutung, dass die beschriebene Erfindung grundsätzlich unabhängig von Bauart, Antriebsart und Einsatzzweck für alle Strömungsmaschinen eingesetzt werden kann. Voraussetzung ist die beschriebene zeitaufgelöste Messung der ersten Messgröße, welche mit der Eingangsleistung des Antriebs verknüpft ist, sowie der Messung der zweiten Messgröße, welche eine Prozessgröße der Strömungsmaschine ist bzw. mit der Ausgangsleistung der Strömungsmaschine verknüpft ist. Wie zuvor erwähnt, kann die Prozessgröße, also die zweite Messgröße, z.B. die Drehzahl des Laufrades oder Antriebs aber auch ein gemessener mittels des Antriebs bzw. durch das Laufrad erzeugter Druck oder andere entsprechende Sensorwerte sein.

Die Ermittlung des Betriebspunktes bzw. des Drosselpunktes als Zustand der Strömungsmaschine während des Betriebs bzw. im (Normal-) Betrieb der Strömungsmaschine kann also vorzugsweise durch den Vergleich der Ist-Verläufe mit im Labor bzw. an einem Referenzsystem gemessenen und auf einer Elektronik der Strömungsmaschine hinterlegten und Soll-Verläufe beinhaltenden Kennfeldern erfolgen.

Die unabhängige Messung und Auswertung der ersten Messgröße (z.B. Statorstrom) und der zweiten Messgröße als Sprungantwort ermöglicht die gegenseitige Plausibilisierung der Messgrößen bzw. deren Verläufe. Dies kann genutzt werden, die Verläufe der Messgröße auf ihre Plausibilität zu pürfen, also zu plausibilisieren, so dass im Betrieb potentiell fehlersichere Aussagen gemacht werden können.

Da die erfassten Messgrößen für die Steuerung des Antriebs bzw. die Steuerung der Strömungsmaschine meist ohnehin erfasst werden und die Strömung durch die Messung nicht zwingend zusätzlich gestört wird, tritt durch das erfindungsgemäße Verfahren kein zusätzlicher Druckverlust durch die Messung des Drucks auf. Zudem ist auch keine zusätzliche Sensorik notwendig, so dass das Verfahren im Wesentlichen durch eine dafür ausgebildete Software oder eine entsprechend ausgebildete Elektronik umgesetzt werden kann.

Durch das erfindungsgemäße Verfahren kann somit eine Änderung des Drosselpunktes erkannt werden, welche beispielsweise durch verstopfte Filter, einen zu geringen Gegendruck (z.B. durch Leckagen) oder ein zu stark angedrosseltes Gebläse (Abgaswege verstopft) verursacht werden kann. Weiter kann in einfacher Weise der Betriebspunkt der Strömungsmaschine bestimmt werden, wobei dadurch auch zugleich Messwerte eventuell im System vorhandener Sensoren, wie einem Volumenstromsensoren, überprüft werden können. Wie beschrieben ist zudem eine Erkennung von Fehlern und insbesondere Antrieb-Fehlern möglich, welche beispielsweise durch eine Entmagnetisierung des Stators oder Rotors, eine falsche Kommutierung des Antriebs sowie durch ein Lösen der Verbindung zwischen Laufrad und Antrieb bzw. Laufrad und Rotor verursacht werden kann. Zudem können die gemäß dem Verfahren bestimmten Messgrößen und insbesondere die zweite Messgröße zur Verbesserung der Drehzahlregelung des Antriebs bzw. der Strömungsmaschine genutzt werden, da es sich bei der Sprungantwort, also dem Ist-Sprungantwortverlauf, um eine Systemidentifikationsgröße handelt, welche für den Drehzahlregler verwendet werden kann, um die Regelparameter im Betrieb optimal einzustellen.

Die Strömungsmaschine weist vorzugsweise ein mit einer aerodynamischen Last beaufschlagtes und durch den Antrieb angetriebenes Laufrad auf. Vorzugsweise kann das Verhalten der Strömungsmaschine mit dem das Laufrad antreibenden Antrieb, welches durch die aerodynamische Last beaufschlagt ist, im Wesentlichen einem Verhalten eines PT1-Gliedes entsprechen, wobei die Strömungsmaschine ausgangsseitig allgemein verzögert auf das eingangsseitige Signal reagieren kann.

Vorteilhaft ist zudem, dass der Antriebsdrehmomentensprung ein positiver Sprung sein kann, bei welchem das erste Niveau auf das zweite Niveau steigt, oder alternativ ein negativer Sprung sein kann, bei welchem das erste Niveau auf das zweite Niveau sinkt. Daraus folgt, dass die erste und zweite Messgröße bzw. deren Verläufe alternativ zu einer Ermittlung bei einem positiven Momentensprung auch bei einem negativen Momentensprung (z.B. bei einem Abschalten des Antriebs) erfasst werden können und die so ermittelten Verläufe weiter gemäß dem erfindungsgemäßen Verfahren analysiert werden können. Beispielsweise kann gemäß dem erfindungsgemäßen Verfahren erst ein positiver Antriebsdrehmomentensprung und die damit einhergehende Ermittlung und Analyse der Verläufe und anschließend ein negativer Antriebsdrehmomentensprung und die damit einhergehende Ermittlung und Analyse der Verläufe durchgeführt werden. Die Alternativen schließen sich also nicht gegenseitig aus, sondern sind vielmehr zeitlich versetzt zueinander und lediglich nicht gleichzeitig durchführbar. Die Analyse des Verhaltens über den negativen Antriebsdrehmomentensprung kann durch ein meist symmetrisches Verhalten bei den darauf erfolgenden Verläufen der zweiten Messgröße, also insbesondere den Drehzahlverläufen, erfolgen.

Falls es die Einbausituation und der Typ der Strömungsmaschine und insbesondere des Gebläses bzw. des Antriebs der Strömungsmaschine zulässt, können der Verlauf der ersten und zweiten Messgröße und die darauf basierende Analyse auch im Rückwärtslauf des Antriebs durchgeführt werden. Wenn es also die Einbausituation zulässt, können damit zusätzliche Informationen über den Betriebspunkt gesammelt werden. Entsprechend sieht eine vorteilhafte Variante des Verfahrens vor, dass der Antrieb in einem Vorwärtslauf betreibbar ist bzw. bei der Durchführung des Verfahrens im Vorwärtslauf betrieben wird und der Antriebsdrehmomentensprung im Vorwärtslauf des Antriebs erfolgt und/oder dass der Antrieb in einem Rückwärtslauf betreibbar ist bzw. bei der Durchführung des Verfahrens im Rückwärtslauf betrieben wird und der Antriebsdrehmomentensprung im Rückwärtslauf des Antriebs erfolgt.

Generell und insbesondere im Hinblick auf eine Erfassung der Verläufe der ersten und zweiten Messgröße bei einem positiven und/oder negativen Antriebsdrehmomentensprung sowie bei einem Vorwärtslauf und/oder einem Rückwärtslauf des Antriebs gilt, dass die Erfassung der Verläufe, der Vergleich der Verläufe mit den jeweiligen Kennfeldern und die Auswertung durch Vergleich der Vergleichswerte mehrfach hintereinander erfolgen kann, um weitere Daten über die Strömungsmaschine sammeln zu können und die Zustände, Zustandsänderungen oder Fehler mit höherer Sicherheit bzw. Genauigkeit bestimmen zu können.

Weiter sieht das Verfahren vorzugsweise vor, dass die erste Messgröße und/oder die zweite Messgröße kontinuierlich während des Betriebes der Strömungsmaschine erfasst und der Ist-Sprungverlauf und der Ist-Sprungantwortverlauf kontinuierlich während des Betriebes mit dem jeweiligen zumindest einen Kennfeld verglichen werden. Dabei kann der Betrieb insbesondere einem Normal-Betrieb entsprechen, so dass die Analyse parallel zu dem Betrieb der Strömungsmaschine möglich ist und keine separaten Betriebsmodi erfordert.

Ferner ist es möglich, den Ist-Sprungverlauf und/oder den Ist-Sprungantwortverlauf in seinem bzw. ihrem jeweiligen Zeitbereich mit dem jeweiligen zumindest einen Kennfeld zu vergleichen. Alternativ oder zusätzlich kann jedoch der Ist-Sprungverlauf und/oder der Ist-Sprungantwortverlauf in seinen bzw. ihren jeweiligen Frequenzbereich transformiert und in seinem bzw. ihren jeweiligen Frequenzbereich mit dem jeweiligen zumindest einen Kennfeld verglichen werden. Die jeweiligen Kennfelder liegen entsprechend dem vorzunehmenden Vergleich ebenfalls über den Zeitbereich oder über den Frequenzbereich vor, so dass die jeweiligen Ist-Verläufe (Ist-Sprungverlauf und Ist-Sprungantwortverlauf) mit den jeweils in den Kennfeldern hinterlegten Soll-Verläufen (Soll-Sprungverlauf und Soll-Sprungantwortverlauf) vergleichbar sind.

Weiter können die erste Messgröße und/oder die zweite Messgröße bei einer Inbetriebnahme und/oder im Normalbetrieb der Strömungsmaschine nach einem vorbestimmten Zeitplan bzw. Muster oder kontinuierlich erfasst und basierend auf der Erfassung das jeweilige zumindest eine Kennfeld (bzw. die jeweiligen in dem zumindest einen Kennfeld enthaltenen Soll-Verläufe) auf die Betriebsbedingungen der Strömungsmaschine kalibriert werden, zu welchen auch beispielsweise Umgebungsbedingungen zählen können.

Die Kalibrierung kann dabei auch insbesondere durch maschinelles Lernen erfolgen. Zur Umsetzung der Kalibrierung durch maschinelles Lernen können beispielsweise neuronale Netze eingesetzt werden.

Beispielsweise kann das neuronale Netz während des Betriebes der Strömungsmaschine trainiert werden oder bereits dafür ausgebildet sein, basierend auf den die Eingangsleistung des Antriebs bestimmenden ersten Messgrößen einen theoretischen Verlauf der zweiten Messgrößen für einen oder verschiedene Betriebsmodi der Strömungsmaschine zu bestimmen und die so ermittelten Kennlinien als zweite Kennfelder zu speichern oder gespeicherte zweite Kennfelder entsprechend anzupassen bzw. zu kalibrieren.

Dabei ist zu beachten, dass ein solches neuronales Netz ein theoretisches Verhalten der Strömungsmaschine nachbildet, so dass auch durch Abweichungen des mittels der zweiten Messgröße gemessenen tatsächlichen Verhaltens von dem durch das neuronale Netz ermittelten theoretischen Verhalten, Fehler bzw. Betriebs- und Drosselpunktänderungen feststellbar sind.

Entsprechend kann gemäß einer weiteren Variante vorgesehen sein, dass die erste Messgröße und/oder Betriebsbedingungen, wie beispielsweise ein Umgebungsdruck, der Strömungsmaschine als Eingangsgröße in ein neuronales Netz eingeben werden bzw. wird, welches ein Verhalten der Strömungsmaschine nachbildet und/oder das Verhalten der Strömungsmaschine nachbildend trainierbar ist. Durch das neuronale Netz kann so eine theoretische zweite Messgröße und/oder eine Kennlinie ermittelt werden, welche den Verlauf der theoretischen zweiten Messgröße wiedergibt. Die so ermittelte Kennlinie oder die zweite Messgröße kann dann als zweites Kennfeld gespeichert bzw. hinterlegt werden oder verwendet werden, um ein bekanntes zweites Kennfeld anzupassen also zu kalibrieren.

Das zumindest eine erste Kennfeld bzw. bei einer Vielzahl von ersten Kennfeldern jedes der ersten Kennfelder kann zudem jeweils mehrere Soll-Sprungverläufe umfassen, wobei jeder Soll-Sprungverlauf jeweils einem Verlauf bei einem vorbestimmten Zustand und/oder einer vorbestimmten Prozessgröße der Strömungsmaschine entspricht. Zusätzlich oder alternativ kann das zumindest eine zweite Kennfeld bzw. bei einer Vielzahl von zweiten Kennfeldern jedes der zweiten Kennfelder jeweils mehrere Soll-Sprungantwortverläufe umfassen, wobei jeder Soll-Sprungantwortverlauf jeweils einem Verlauf bei einem vorbestimmten Zustand und/oder einer vorbestimmten Prozessgröße der Strömungsmaschine entspricht.

Gemäß einer ersten besonders vorteilhaften Weiterbildung ist ein Zustand ein Betriebspunkt der Strömungsmaschine. Der erste Vergleichswert und der zweite Vergleichswert entsprechen jeweils einem Druckaufbau durch die Strömungsmaschine und einem Volumenstrom bzw. einem Wertepaar aus Druck bzw. Druckaufbau und Volumenstrom und entsprechen bzw. definieren somit jeweils einem theoretischen Betriebspunkt. Der durch den ersten Vergleichswert ermittelte erste theoretische Betriebspunkt und der durch den zweiten Vergleichswert ermittelte zweite theoretische Betriebspunkt werden nach deren Ermittlung miteinander verglichen und dadurch auf ihre Plausibilität geprüft. Stimmen der erste und der zweite theoretische Betriebspunkt innerhalb einer vorzugsweise vorbestimmten Toleranz überein, sind die theoretischen Betriebspunkte plausibel. Aus den so plausibilisierten theoretischen Betriebspunkten wird beispielsweise durch Bildung eines Mittelwertes ein Wert bestimmt, der dem (tatsächlichen) Betriebspunkt entspricht bzw. diesen annähert. Stimmen die theoretischen Betriebspunkte nicht innerhalb der Toleranz überein, sind die theoretischen Betriebspunkte nicht plausibel, so dass ein Fehler innerhalb der Strömungsmaschine wahrscheinlich ist und entsprechend ein Fehler erkannt wird.

Gemäß einer zweiten besonders vorteilhaften Weiterbildung des Verfahrens, welche jedoch zusätzlich und/oder parallel zu der ersten besonders vorteilhaften Weiterbildung erfolgen kann, ist ein (weiterer) Zustand ein Drosselpunkt der Strömungsmaschine. Hierbei ist bzw. entsprechen der erste Vergleichswert und der zweite Vergleichswert jeweils eine Abweichung des jeweiligen Ist-Verlaufs (Ist-Sprungverlauf, Ist-Sprungantwortverlauf) vom Soll-Verlauf (Soll-Sprungverlauf, Soll-Sprungantwortverlauf). Die durch den ersten Vergleichswert ermittelte erste Abweichung und die durch den zweiten Vergleichswert ermittelte zweite Abweichung werden miteinander verglichen und dadurch auf ihre Plausibilität geprüft. Stimmen die Abweichungen innerhalb einer vorzugsweise vorbestimmten Toleranz überein, sind die Abweichungen plausibel. Ein aus den plausibilisierten Abweichungen bestimmter Wert entspricht einer Abweichung bzw. Änderung des Drosselpunkts, so dass dadurch eine Drosselpunktänderung erkannt wird. Stimmen die Abweichungen nicht innerhalb der Toleranz überein, sind die Abweichungen nicht plausibel und ein Fehler wird erkannt.

Eine dritte besonders vorteilhafte Weiterbildung des Verfahrens, welche parallel zu der ersten und zweiten besonders vorteilhaften Verfahrensvariante angewendet werden kann, sieht vor, dass ein Fehler der Strömungsmaschine ein Fehler des Antriebs, also ein Antrieb-Fehler ist. Der erste Vergleichswert und der zweite Vergleichswert entsprechen hierbei jeweils einer Abweichung des jeweiligen Ist-Verlaufs vom jeweiligen Soll-Verlauf. Der Antrieb-Fehler wird erkannt, wenn die erste Abweichung außerhalb eines Toleranzbereichs und die zweite Abweichung innerhalb eines Toleranzbereichs liegen, der eingangsseitige Verlauf also nicht mehr ausreichend mit dem ausgangsseitigen Verlauf korreliert.

Vorzugsweise kann zudem vorgesehen sein, dass eine Vielzahl von vorbestimmten Kennfeldern hinterlegt ist, welche jeweils verschiedenen Umgebungsbedingungen der Strömungsmaschine entsprechen.

Grundsätzlich gilt also, dass das durch die erste Messgröße bestimmte eingangsseitige Verhalten des durch die Strömungsmaschine gebildeten Systems und das durch die zweite Messgröße bestimmte ausgangsseitige Verhalten des Systems durch Erfassung der jeweiligen Verläufe der Messgrößen erfasst werden. Anschließend werden die erfassten Verläufe als Ist-Verläufe mit in den Kennfeldern hinterlegten jeweils zugehörigen Soll-Verläufen gemessen. Aus dem Vergleich der Ist- und Soll-Verläufe lassen sich dann Rückschlüsse auf das System und insbesondere Betriebspunkte, Drosselpunkte und Fehler des Systems ziehen.

Umgebungsbedingungen, wie beispielsweise eine Dichte eines durch die Strömungsmaschine strömenden Mediums, können den Antriebstrom bzw. allgemein die erste Messgröße sowie die Sprungantworten, also die zweite Messgröße, beeinflussen, da das über das Laufrad auf den Antrieb wirkende aerodynamische Lastmoment sich dadurch ändern kann. Solche, meist verhältnismäßig kleine Änderungen der Umgebungsbedingungen, können durch Toleranzbereiche bzw. Toleranzfelder um die in den Kennfeldern hinterlegten Soll-Verläufe berücksichtigt werden. Alternativ oder zusätzlich, kann eine solche Abweichung der Ist-Verläufe von den Soll-Verläufen innerhalb der Toleranzbereiche bewusst genutzt werden, um auf eine Änderung der Umgebungsbedingung schließen zu können.

Es hat sich gezeigt, dass die Strömungsmaschine keine Doppeldeutigkeit bei der Beziehung von Drehmoment und Drehzahl besitzen sollte, da sich sonst Statorstrom und Sprungantwort in zwei Betriebspunkten gleichen. Radialgebläse ohne Gehäuse sowie Axialgebläse als Strömungsmaschinen können diese Doppeldeutigkeit aufweisen. Durch den optionalen Rückwärtslauf des Antriebs und damit dem Rückwärtslauf bzw. -betrieb des Gebläses kann der korrekte Betriebspunkt aber erkannt werden, so dass das Verfahren auch bei solchen Strömungsmaschinen einsetzbar ist, wobei hierfür das Verfahren einmal bei einem Vorwärtslauf und einmal bei einem Rückwärtslauf durchgeführt werden muss.

Generell kann das vorstehend beschriebene Verfahren von einer in die Strömungsmaschine integrierten Elektronik ausgeführt werden, in welcher auch die Kennfelder hinterlegt sind. Hierfür kann die Elektronik eine zur Erfassung der Ist-Verläufe ausgebildete Mess-Elektronik und eine für den Vergleich der Ist-Verläufe mit den in den Kennfeldern hinterlegten Soll-Verläufen ausgebildete Auswerte-Elektronik aufweisen, durch welche auch die Zustände, Zustandsänderungen und Fehler ermittel- bzw. bestimmbar sind.

Ferner kann eine solche Elektronik erkannte bzw. bestimmte Zustände, Zustandsänderungen und Fehler auch über eine entsprechend ausgebildete und beispielsweise in die Elektronik integrierte Kommunikationselektronik an andere Systeme, übergeordnete Systeme oder Anzeigen weitergeben. Die Übermittlung kann z.B. per Funk oder über ein Bus-System erfolgen.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Fig. 1 Ist-Sprungantwortverlauf einer Drehzahl eines Antriebs;
Fig. 2 Kennfeld mit mehreren Soll-Sprungantwortverläufen.

Die Figuren sind beispielhaft schematisch. Exemplarisch wird im Folgenden ein Radial-Gebläse mit Spiralgehäuse als Strömungsmaschine betrachtet, dessen Laufrad durch einen EC-Gleichstrommotor angetrieben und dessen Statorstrom elektronisch geregelt wird. Die zweite Messgröße, welche auch als zeitaufgelöste Prozessgröße bezeichnet werden kann, ist in diesem Fall die Drehzahl des Laufrades.

Das dynamische System des Radial-Gebläses, bestehend aus dem Antrieb, dem Laufrad und einer auf das Laufrad wirkenden aerodynamischer Last, kann als PT1-Glied modelliert bzw. betrachtet werden.

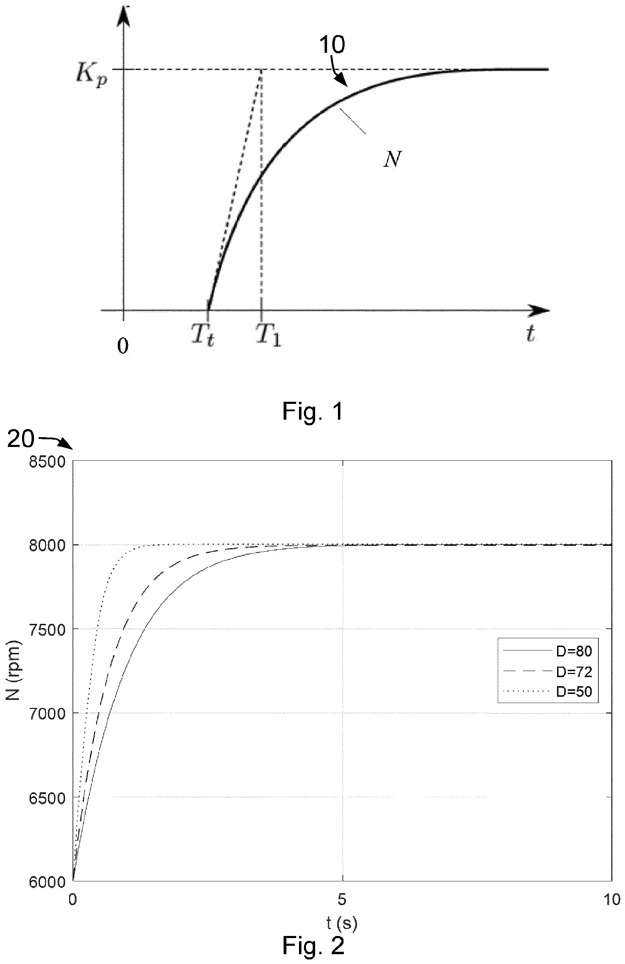

Figur 1 zeigt qualitativ den dynamischen Verlauf der Drehzahl N als zweite Messgröße bei einem Sprung des Antriebsdrehmomentes zum Zeitpunkt t = 0. Der Verlauf der zweiten Messgröße wird auch Sprungantwort bzw. Ist-Sprungantwort genannt. Dabei ist Kₚ ein Verstärkungsfaktor, Tt die Totzeit, innerhalb derer das System bzw. die Drehzahl nicht auf den Drehmomentensprung reagiert, und T₁ die Verzögerungszeit.

Figur 2 entspricht einem Kennfeld 20 mit mehreren Soll-Sprungantwortverläufen, wobei jeder Soll-Sprungantwortverlauf einem Verlauf der Drehzahl N bei einem anderen Drosselpunkt D entspricht. Die in Figur 2 dargestellten (Soll-) Sprungantwortverläufe entsprechen den bekannten bzw. erwarteten und somit vorbekannten Sprungantwortverläufen auf einen Drehmomentensprung, welcher einen Anstieg der Drehzahl von 6000 rpm (revolutions per minute, also Umdrehungen pro Minute) auf 8000 rpm verursacht.

Diese in Figur 2 dargestellten (Soll-) Sprungantwortverläufe können beispielsweise durch Messungen an einem mit verschiedenen Drosselpunkten betriebenen Referenzsystem bzw. Referenzströmungsmaschine ermittelt werden.

Aus einem Betrieb des Referenzsystems mit einem Drosselpunkt D = 80 ergibt sich eine steile Anlagenkennline (durchgezogene Linie) im Luftleistungskennfeld. Das dem Referenzsystem entsprechende Gebläse ist also stark angedrosselt. Der Betrieb des Referenzsystems mit einem Drosselpunkt D = 72 entspricht dem Drosselpunkt im Normalbetrieb und somit einem Sprungantwortverlauf (gestrichelte Linie) in einem Normalbetrieb des Gebläses. Bei einem Drosselpunkt D = 50 wird das Referenzsystem bzw. das Gebläse mit wenig Gegendruck betrieben, was zu einer flachen Anlagenkennlinie bzw. dem entsprechen Soll-Sprungantwortverlauf (gepunktete Linie) führt.

Durch einen Vergleich der Ist-Sprungantwort mit den verschiedenen Soll-Sprungantworten, also des Ist-Sprungantwortverlaufs mit den verschiedenen Soll-Sprungantwortverläufen, kann also auf den Drosselpunkt oder zumindest eine Änderung des Drosselpunktes geschlossen werden.

Die eingangsseitig quasi-stationären Statorströme des Antriebs als erste Messgröße wurden zuvor so ermittelt, dass die gewünschten Drehzahlen sich beim Antriebsdrehmomentensprung entsprechend einstellen. Analog bzw. alternativ zum Statorstrom des Antriebs kann auch die elektrisch umgesetzte Leistung im Stator des Antriebs als erste Messgröße erfasst und dessen Verlauf bestimmt werden.

Die in Figur 2 abgebildeten (Soll-) Sprungantworten unterscheiden sich deutlich, da das aerodynamische Lastmoment am Laufrad in den unterschiedlich gewählten Drosselpunkten unterschiedlich stark wirkt.

Die Ist-Sprungantworten werden im Betrieb des Gebläses kontinuierlich oder bei einer entsprechenden Anweisung von einer Elektronik der Strömungsmaschine und hier des Gebläses erfasst, ausgewertet und analysiert. Die Auswertung, also der Vergleich, der Ist-Verläufe mit den Soll-Verläufen kann dabei im Zeitbereich oder im Frequenzbereich durchgeführt werden.

Durch das erfindungsgemäße Verfahren und insbesondere durch die Auswertung des Statorstroms als erste Messgröße und der Drehzahl des Antriebs oder des Laufrades als zweite Messgröße sind beispielsweise die folgenden Funktionen alternativ oder parallel zueinander umsetzbar:
- Betriebspunkt-Bestimmung
- Drosselpunkt-Abschätzung
- Antrieb-Fehler-Erkennung

Bei der Betriebspunkt-Bestimmung soll der Betriebspunkt der Strömungsmaschine also hier des Gebläses bestimmt werden, welcher einem Wertepaar aus Volumenstorm und Druck entspricht. Hierfür sind auf der zugehörigen Elektronik vorbekannte erste Kennfelder und zweite Kennfelder 20 hinterlegt.

Zunächst erfolgt die Erfassung des Verlaufs des Statorstroms als erste Messgröße (Ist-Sprungverlauf) und des Verlaufs der Drehzahl des Antriebs bzw. der Drehzahl des Laufrades als zweite Messgröße (Ist-Sprungantwortverlauf 10).

Anschließend erfolgt die Auswertung des quasi-stationären Statorstroms vor und nach dem Antriebsdrehmomentensprung bei einer vor und nach dem Antriebsdrehmomentensprung jeweils konstanter Drehzahl des Antriebs, durch Vergleich des Ist-Sprungverlaufs mit einem zugehörigen Kennfeld, welches auch als erstes Kennfeld bezeichnet werden kann. Aus dem Vergleich mit dem Kennfeld wird ein den Betriebspunkt bestimmendes (erstes) Wertepaar aus Druck und Volumenstrom bestimmt, welches einem ersten Vergleichswert entspricht.

Zugleich bzw. nach der Ermittlung des Ist-Sprungantwortverlaufs 10 erfolgt die Auswertung der Sprungantwort über den Antriebsdrehmomentensprung. Dabei wird der Ist-Sprungantwortverlauf 10 mit einem zugehörigen Kennfeld 20, welches auch als zweites Kennfeld 20 bezeichnet werden kann, verglichen und durch den Vergleich ein den Betriebspunkt bestimmendes (zweites) Wertepaar aus Druck und Volumenstrom bestimmt, welches einem zweiten Vergleichswert entspricht.

Der erste Vergleichswert und der zweite Vergleichswert, welche jeweils einen theoretischen Betriebspunkt und einem theoretisch gleichen Betriebspunkt entsprechen, werden anhand einer Toleranzbandmethode bewertet. Weichen die beiden Vergleichswerte zu stark voneinander ab, liegen also außerhalb des Toleranzbereiches bzw. der vorbestimmten Toleranz, stimmen die beiden theoretischen Betriebspunkte, welche eigentlich identisch sein müssten, nicht überein, was durch einen Fehler bzw. Defekt des Systems, also des Gebläses und meist durch einen Fehler des Antriebs begründet ist. Weichen die beiden Vergleichswerte also zu stark (außerhalb der Toleranz) voneinander ab, sind die Vergleichswerte nicht plausibel und es wird eine Fehlermeldung ausgegeben.

Bei der Drosselpunkt-Abschätzung soll der Drosselpunkt der Strömungsmaschine bzw. hier des Gebläses im Betrieb abgeschätzt und eine Änderung des Drosselpunktes dadurch erkannt werden. Dabei kann zugleich der Betriebspunkt bestimmt werden, was jedoch nicht zwingend erforderlich ist, da für die Drosselpunkt-Abschätzung nur ein Überschreiten von Schwellwerten der Drosselung erkannt werden muss. Diese Funktion kann z.B. bei Inbetriebnahme durch Aufzeichnung und Speicherung von Soll-Verläufen in Kennfeldern angelernt werden, um während des dauerhaften Betriebes entstehende zugesetzte Filter erkennen zu können.

Zur Drosselpunkt-Abschätzung wird wiederum zunächst die Erfassung des Verlaufs des Statorstroms als erste Messgröße (Ist-Sprungverlauf) und des Verlaufs der Drehzahl des Antriebs bzw. der Drehzahl des Laufrades als zweite Messgröße (Ist-Sprungantwortverlauf 10) durchgeführt.

Darauf basierend erfolgt anschließend die Auswertung des quasi-stationären Statorstroms vor und nach dem Antriebsdrehmomentensprung bei einer jeweils konstanten Drehzahl. Hierfür wird der gemessene bzw. erfasste Ist-Sprungverlauf mit einem in dem zugehörigen (ersten) Kennfeld um einen Soll-Sprungverlauf angeordneten Toleranzbereich verglichen.

Zugleich bzw. nach der Erfassung der Ist-Sprungantwort erfolgt deren Auswertung durch einen Vergleich des Ist-Sprungantwortverlaufs 10 mit einem in dem zugehörigen (zweiten) Kennfeld 20 um einen Soll-Sprungantwortverlauf angeordneten Toleranzbereich.

Aus den beiden Vergleichen ergibt sich jeweils ein Vergleichswert, wie beispielsweise die Abweichung des jeweiligen Ist-Verlaufs vom Soll-Verlauf. Die beiden Vergleichswerte werden beispielsweise anhand der Toleranzbandmethode bewertet und dadurch auf ihre Plausibilität geprüft. Weichen die Vergleichswerte zu stark voneinander ab, liegen also außerhalb einer vorbestimmten Toleranz, liegt ein Fehler innerhalb des Systems vor, so dass eine Fehlermeldung ausgegeben wird, da der Antrieb höchstwahrscheinlich defekt ist. Stimmen die ermittelten Vergleichswerte innerhalb der Toleranz überein, können die Vergleichswerte, welche jeweils einer theoretischen Abweichung entsprechen, beispielsweise durch Bildung eines Mittelwertes verrechnet werden. Ist die sich dadurch ergebende, einer tatsächlichen Abweichung angenäherte Abweichung größer als ein vorbestimmter Schwellwert, hat sich der Drosselpunktes des Systems verändert.

Neben der Betriebspunktbestimmung und der Abschätzung einer Änderung des Drosselpunktes kann zudem eine eigenständige Erkennung eines Fehlers und insbesondere eines Antrieb-Fehlers umgesetzt werden. Bei der Antrieb-Fehler-Erkennung wird davon ausgegangen, dass sich Drosselpunkt und Umgebungsbedingungen im System nicht maßgeblich ändern und sich somit auch der Verlauf der Sprungantwort, also der Ist-Sprungantwortverlauf 10, nicht ändert. Falls der Antriebwirkungsgrad durch einen Fehler abnimmt, wird für dieselbe Drehzahl im gleichen Drosselpunkt mehr Statorstrom benötigt. Ein solcher Fehler im Antrieb kann durch die Plausibilisierung der Messung von Statorstrom (Ist-Sprungverlauf) und Sprungantwort (Ist-Sprungantwortverlauf 10) erkannt werden.

Erfindungsgemäß wird auch zunächst der Ist-Sprungverlauf und der Ist-Sprungantwortverlauf 10 erfasst und anschließend durch Vergleich mit den jeweiligen Soll-Verläufen ausgewertet. Dabei können die Soll-Verläufe bei einer Inbetriebnahme oder zuvor durchgeführten Verfahrensdurchläufen aufgezeichnet worden sein, so dass aus dem Vergleich eine Änderung der Ist-Verläufe gegenüber den Soll-Verläufen erkannt wird.

Überschreitet eine durch den jeweiligen Vergleich ermittelter Vergleichswert und insbesondere der erste Vergleichswert eine vorbestimmte Toleranzschwelle, wird ein Fehler erkannt und eine Fehlermeldung ausgegeben.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Bestimmung und Erkennung von Zuständen, Zustandsänderungen und Fehlern einer einen Antrieb umfassenden Strömungsmaschine,
wobei ein Verlauf einer unmittelbar von einer Eingangsleistung des Antriebs abhängigen ersten Messgröße und ein Verlauf einer unmittelbar von einer Ausgangsleistung der Strömungsmaschine abhängigen zweiten Messgröße bei einem vorbestimmten Antriebsdrehmomentensprung, bei welchem sich die erste Messgröße sprungartig von einem ersten quasistationären Niveau auf ein zweites quasistationäres Niveau bewegt, über die Zeit erfasst werden,
wobei der Verlauf der ersten Messgröße einem Ist-Sprungverlauf entspricht und der Verlauf der zweiten Messgröße als ein Ist-Sprungantwortverlauf (10) einer Sprungantwort auf den Antriebsdrehmomentensprung entspricht,
wobei der Ist-Sprungverlauf mit zumindest einem vorbestimmten ersten Kennfeld, das zumindest einen Soll-Sprungverlauf aufweist, und der Ist-Sprungantwortverlauf (10) mit zumindest einem vorbestimmten zweiten Kennfeld (20), das zumindest einen Soll-Sprungantwortverlauf aufweist, verglichen werden,
wobei aus dem Vergleich des Ist-Sprungverlaufs mit dem zumindest einen ersten Kennfeld ein erster Vergleichswert und aus dem Vergleich des Ist-Sprungantwortverlaufs (10) mit dem zumindest einen zweiten Kennfeld (20) ein zweiter Vergleichswert bestimmt wird,
und wobei aus dem ersten Vergleichswert und/oder dem zweiten Vergleichswert und/oder aus einem Vergleich des ersten Vergleichswertes und des zweiten Vergleichswertes ein Zustand, eine Zustandsänderung oder ein Fehler der Strömungsmaschine bestimmt wird.

2. Verfahren nach Anspruch 1,
wobei die Strömungsmaschine ein mit einer aerodynamischen Last beaufschlagtes und durch den Antrieb angetriebenes Laufrad aufweist
und das Verhalten der Strömungsmaschine mit dem das durch die aerodynamische Last beaufschlagten Laufrad antreibenden Antrieb insbesondere einem Verhalten eines PT1-Gliedes entspricht.

3. Verfahren nach Anspruch 1 oder 2,
wobei der Antriebsdrehmomentensprung ein positiver Sprung ist, bei welchem das erste Niveau auf das zweite Niveau steigt, oder ein negativer Sprung ist, bei welchem das erste Niveau auf das zweite Niveau sinkt.

4. Verfahren nach einem der vorhergehenden Ansprüche,
wobei der Antrieb in einem Vorwärtslauf betreibbar ist und der Antriebsdrehmomentensprung im Vorwärtslauf des Antriebs erfolgt
und/oder wobei der Antrieb in einem Rückwärtslauf betreibbar ist und der Antriebsdrehmomentensprung im Rückwärtslauf des Antriebs erfolgt.

5. Verfahren nach einem der vorhergehenden Ansprüche,
wobei die erste Messgröße und/oder die zweite Messgröße kontinuierlich während des Betriebes der Strömungsmaschine erfasst und der Ist-Sprungverlauf und der Ist-Sprungantwortverlauf (10) kontinuierlich während des Betriebes mit dem jeweiligen zumindest einen Kennfeld (20) verglichen werden.

6. Verfahren nach einem der vorhergehenden Ansprüche,
wobei der Ist-Sprungverlauf und/oder der Ist-Sprungantwortverlauf (10) in seinem jeweiligen Zeitbereich mit dem jeweiligen zumindest einen Kennfeld (20) verglichen werden/wird
und/oder wobei der Ist-Sprungverlauf und/oder der Ist-Sprungantwortverlauf (10) in seinen jeweiligen Frequenzbereich transformiert und in seinem jeweiligen Frequenzbereich mit dem jeweiligen zumindest einen Kennfeld (20) verglichen werden/wird.

7. Verfahren nach einem der vorhergehenden Ansprüche,
wobei die erste Messgröße und/oder die zweite Messgröße bei einer Inbetriebnahme und/oder im Normalbetrieb der Strömungsmaschine nach einem vorbestimmten Zeitplan oder kontinuierlich erfasst und basierend auf der Erfassung das jeweilige zumindest eine Kennfeld (20) auf die Betriebsbedingungen der Strömungsmaschine kalibriert werden.

8. Verfahren nach dem vorhergehenden Anspruch,
wobei die erste Messgröße und/oder Betriebsbedingungen der Strömungsmaschine als Eingangsgröße in ein neuronales Netz eingeben werden/wird, welches ein Verhalten der Strömungsmaschine nachbildet und/oder das Verhalten der Strömungsmaschine nachbildend trainierbar ist, so dass durch das neuronale Netz eine theoretische zweite Messgröße und/oder eine den Verlauf der theoretischen zweiten Messgröße wiedergebende Kennlinie ermittelt wird, welche als zweites Kennfeld speicherbar oder durch welche ein zweites Kennfeld kalibrierbar ist.

9. Verfahren nach einem der vorhergehenden Ansprüche,
wobei das zumindest eine erste Kennfeld mehrere Soll-Sprungverläufe umfasst und wobei jeder Soll-Sprungverlauf jeweils einem Verlauf bei einem vorbestimmten Zustand und/oder einer vorbestimmten Prozessgröße der Strömungsmaschine entspricht
und/oder das zumindest eine zweite Kennfeld (20) mehrere Soll-Sprungantwortverläufe umfasst und wobei jeder Soll-Sprungantwortverlauf jeweils einem Verlauf bei einem vorbestimmten Zustand und/oder einer vorbestimmten Prozessgröße der Strömungsmaschine entspricht.

10. Verfahren nach einem der vorhergehenden Ansprüche,
wobei ein Zustand ein Betriebspunkt der Strömungsmaschine ist,
wobei der erste Vergleichswert und der zweite Vergleichswert jeweils einem Druckaufbau durch die Strömungsmaschine und einem Volumenstrom und somit jeweils einem theoretischen Betriebspunkt entsprechen,
der durch den ersten Vergleichswert ermittelte erste theoretische Betriebspunkt und der durch den zweiten Vergleichswert ermittelte zweite theoretische Betriebspunkt miteinander verglichen und dadurch auf Plausibilität geprüft werden,
wobei die innerhalb einer Toleranz übereinstimmenden theoretischen Betriebspunkte plausibel sind und ein aus den theoretischen Betriebspunkten bestimmter Wert dem Betriebspunkt entspricht und wobei die nicht innerhalb der Toleranz übereinstimmenden theoretischen Betriebspunkte nicht plausibel sind und ein Fehler erkannt wird.

11. Verfahren nach einem der vorhergehenden Ansprüche,
wobei ein Zustand ein Drosselpunkt der Strömungsmaschine ist,
wobei der erste Vergleichswert und der zweite Vergleichswert jeweils eine Abweichung des jeweiligen Ist-Verlaufs vom Soll-Verlauf entsprechen,
die durch den ersten Vergleichswert ermittelte erste Abweichung und die durch den zweiten Vergleichswert ermittelte zweite Abweichung miteinander verglichen und dadurch auf Plausibilität geprüft werden,
wobei die innerhalb einer Toleranz übereinstimmenden Abweichungen plausibel sind und ein aus den Abweichungen bestimmter Wert einer Abweichung von dem Drosselpunkt entspricht und wobei die nicht innerhalb der Toleranz übereinstimmende Abweichungen nicht plausibel sind und ein Fehler erkannt wird.

12. Verfahren nach einem der vorhergehenden Ansprüche,
wobei ein Fehler der Strömungsmaschine ein Antrieb-Fehler ist, wobei der erste Vergleichswert und der zweite Vergleichswert jeweils eine Abweichung des jeweiligen Ist-Verlaufs vom Soll-Verlauf entsprechen,
wobei der Antrieb-Fehler erkannt wird, wenn die erste Abweichung außerhalb eines Toleranzbereichs und die zweite Abweichung innerhalb eines Toleranzbereichs liegt.

13. Verfahren nach einem der vorhergehenden Ansprüche,
wobei eine Vielzahl von vorbestimmten Kennfeldern (20) hinterlegt ist, welche jeweils verschiedenen Umgebungsbedingungen der Strömungsmaschine entsprechen.

14. Strömungsmaschine mit einer Elektronik, welche ausgebildet ist, das Verfahren gemäß einem der Ansprüche 1 bis 13 durchzuführen.
